# EUROPEAN PATENT APPLICATION

(11) **EP 4 284 072 A1**
(43) Date of publication of application: **29.11.2023**
(21) Application number: 22175198.5
(22) Date of filing: 24.05.2022
(51) Int. Cl.: H04W 48/20, H04L 43/0852, H04W 8/00, H04W 24/08, H04W 88/04, H04W 92/18

(54) **SELECTING A RELAY USER EQUIPMENT TO ALLOW A REMOTE USER EQUIPMENT TO COMMUNICATE WITH A DESTINATION**

(71) Applicant: Nokia Technologies Oy, 02610 Espoo (FI)
(72) Inventor: KIILERICH PRATAS, Nuno Manuel, 9260 Gistrup (DK); SABOURI-SICHANI, Faranaz, 9220 Aalborg (DK); VAN PHAN, Vinh, 90100 Oulu (FI); LING, Yu, 02700 Kauniainen (FI); PANZNER, Berthold, 83607 Holzkirchen (DE)
(74) Representative: Script IP Limited

(57) **Abstract**

Selecting a relay user equipment at a remote user equipment to communicate with a destination that may be the network or a further user equipment. The remote user equipment may select the relay user equipment based on the quality of the channel link between them and the setup latency of any link required between the relay user equipment and the destination. This latter may be determined from a signal output by potential relay user equipment the signal indicating different latencies associated with setting up links for different quality of service profiles.

## Description

### TECHNOLOGICAL FIELD

Various example embodiments relate to selecting a relay user equipment for communication with a remote destination.

### BACKGROUND

Sidelink channels between user equipment allow user equipment to communicate directly with each other and can be used to allow a remote user equipment to communicate with the network or a distant user equipment via an intermediate or relay user equipment. The relay user equipment receives and forwards signals between the two devices/nodes.

Different relay user equipment with different capabilities and different quality links to the remote user equipment and upstream device may be available in a particular area and the appropriate selection of a user equipment can improve latency and signal quality.

The link between the remote UE and the relay UE may be able to be determined from the remote UE but the upstream link from the relay UE to the destination is important and less easy to determine.

### BRIEF SUMMARY

The scope of protection sought for various embodiments of the invention is set out by the independent claims. The embodiments and features, if any, described in this specification that do not fall under the scope of the independent claims are to be interpreted as examples useful for understanding various embodiments of the invention.

According to various, but not necessarily all, embodiments of the invention there is provided an apparatus according to one aspect, comprising means for determining a plurality of latencies associated with data communication with a further apparatus, said plurality of latencies corresponding to a plurality of quality of service profiles for said data communication, said plurality of latencies each comprising a latency for setting up a link with said further apparatus with said quality of service profile; means for generating for at least some of said plurality of determined latencies an indicator of said latency and an indicator of said corresponding quality of service profile; and means for outputting said indicators.

An apparatus may determine and output information regarding the latency associated with communicating with a further apparatus, the latency includes the setup latency required for setting up a link for the transmission of the data. The latency of setting up the link may be dependent upon the link required to provide a desired quality of service profile for a particular data communication. By outputting this information it may become available to remote apparatus that may want to communicate with the further apparatus allowing them to select an intermediate apparatus for a data communication in an informed manner that take latency into account. In this regard the setup latency associated with any link required for the further transmission of data will affect the latency of the data transmission and may be an important consideration when selecting an intermediate or relay apparatus.

In some example embodiments, said means for determining is configured to determine which of said plurality of quality of service profiles is currently supported by said apparatus and to determine latencies for at least some of said supported quality of service profiles.

In some example embodiments, latencies are determined for each supported quality of service profile. In other embodiments, quality of services are grouped into services with similar characteristics and a latency for a group is determined.

In some example embodiments, said means for determining is configured to determine said supported quality of service profiles in dependence upon at least one of network limitations, the apparatus's current connected state, the apparatus's current load and the apparatus's battery charge level.

In some example embodiments, said quality of service profiles, comprise 5QI profiles.

In some example embodiments, said quality of service profiles, comprise different service characteristics such as priority level, packet delay and packet error rate.

In some example embodiments, said means for determining is configured to determine a plurality of latencies for at least one of said quality of service profiles, said plurality of latencies for said at least one of said quality of service profiles each relating to a different payload size.

In some example embodiments said different payload size comprises a threshold value, said at least one of said quality of service profiles each relating to a different payload threshold.

In some example embodiments, said means for determining is configured to determine said latencies periodically.

In some example embodiments, said means for outputting comprises means for broadcasting.

In some example embodiments, said apparatus further comprises means for receiving from a remote apparatus a request for information on data communication with said further apparatus, said means for determining is configured to determine said latencies in response to receipt of said request; and said means for outputting is configured to transmit said indicators to said remote apparatus.

In some example embodiments, said means for determining is configured prior to determining said plurality of latencies to determine whether said plurality of latencies have changed since indicators of previously determined latency were output, and where so to determine updated latencies, and where not to indicate to said means for outputting to output said indicators of said previously determined latencies.

In some example embodiments, said means for determining is configured to determine said plurality of latencies in dependence upon a current radio resource control RRC state of said apparatus.

In some example embodiments, in response to said current RRC state being an idle state, said means for determining is configured to determine an expected time to transition to said radio resource control RRC connected state, said plurality of latencies each including said expected time to transition to said RRC connected state.

In some example embodiments, in response to said current RRC state being an inactive state, said means for determining is configured to determine if said quality of service profile and payload size require an RRC connected state; and
if so to determine an expected time for said apparatus to transition to said RRC connected state, said latency associated with said quality of service profile and payload size including said expected time; and
if not to determine a configured grant periodicity and to determine said latency associated with said quality of service profile and payload size in dependence upon said configured grant periodicity.

In some example embodiments, said means for determining is configured to determine said expected time to transition to said RRC connected state in dependence upon an estimated time to perform a RACH random access channel procedure.

In some example embodiments, said estimated time to perform said RACH procedure is determined in dependence upon random access and contention resolution timers, the periodicity of the physical random access channel resources PRACH associated with the synchronisation signal block SSB selected by the apparatus.

In some example embodiments, in response to said current RRC state being a connected state, said means for determining is configured to determine a time to be allocated one of an uplink or downlink resource, said determined latency comprising said determined time.

In some example embodiments, when said determined latency includes said time to transition to said RRC connected state, said means for determining is further configured to determine an estimated time for said apparatus to be allocated one of an uplink or downlink resource in said RRC connected state, said determined latency further comprising said estimated time.

According to various, but not necessarily all, embodiments of the invention there is provided an apparatus according to a further aspect comprising: means for receiving at least one indicator of a latency and at least one indicator of a corresponding quality of service profile from a plurality of intermediate apparatuses, said at least one indicator of latency being indicative of a latency associated with setting up a link able to support said corresponding quality of service profile between said intermediate apparatus and a further apparatus; means for determining a quality of a sidelink channel for communicating with each of said intermediate apparatuses; and means for selecting one of said intermediate apparatuses as a relay apparatus for a predetermined communication with said further apparatus in dependence upon said latency indicators, said quality of said sidelink channels and characteristics of said predetermined communication.

The availability of information related to the latency of setting up a link able to support a particular quality of service profile of various potential intermediate apparatuses allows an apparatus to select one of these potential intermediate apparatus to relay a data transmission to a network destination in a way that takes latency associated with using this apparatus into account.

In some example embodiments, said means for selecting is configured to determine a required quality of service profile for said predetermined communication and to select in dependence upon latency indicators associated with a corresponding quality of service profile.

In some example embodiments, said means for receiving is configured to receive a plurality of indicators of a plurality of latencies for at least one of said quality of service profiles from at least one of said intermediate apparatuses, said plurality of latencies each relating to a different payload size; and said means for selecting is configured to select in dependence upon said latency associated with a payload of a size corresponding to said payload of said predetermined communication.

In some example embodiments, the apparatus is configured to generate a request for an indication of said latencies and to transmit said request to said plurality of intermediate apparatuses.

According to various, but not necessarily all, embodiments of the invention there is provided a wireless communication system comprising a plurality of apparatus according to one aspect and an according to a further aspect.

In some example embodiments the means comprise: at least one processor; and at least one memory storing instructions that, when executed by the at least one processor, cause the performance of the apparatus.

According to various, but not necessarily all, embodiments of the invention there is provided according to a yet further aspect a method performed at an apparatus comprising: determining a plurality of latencies associated with data communication with a further apparatus, said plurality of latencies corresponding to a plurality of quality of service profiles for said data communication, said plurality of latencies each comprising a latency for setting up a link with said further apparatus with said quality of service profile; generating for at least some of said plurality of determined latencies an indicator of said latency and an indicator of said corresponding quality of service profile; and outputting said indicators.

In some example embodiments, said step of determining determines which of said plurality of quality of service profiles is currently supported by said apparatus and determines latencies for at least some of said supported quality of service profiles.

In some example embodiments, said step of determining determines said supported quality of service profiles in dependence upon at least one of network limitations, the apparatus's current connected state, the apparatus's current load and the apparatus's battery charge level.

In some example embodiments, said step of determining determines a plurality of latencies for at least one of said quality of service profiles, said plurality of latencies for said at least one of said quality of service profiles each relating to a different payload size.

In some example embodiments, said step determining determines said latencies periodically.

In some example embodiments, said step of outputting comprises broadcasting.

In some example embodiments, said step of determining said latencies is performed on receiving from a remote apparatus a request for information on data communication; and said step of outputting comprises transmitting said indicators to said remote apparatus.

In some example embodiments, said step of determining comprises prior to determining said plurality of latencies determining whether said plurality of latencies have changed since indicators of previously determined latency were output, and where so to determining updated latencies, and where not outputting said indicators of said previously determined latencies.

In some example embodiments, said step of determining comprises determining said plurality of latencies in dependence upon a current RRC state of said apparatus.

In some example embodiments, in response to said current RRC state being an idle state, said step of determining determines an expected time to transition to said RRC connected state, and said plurality of latencies each include said expected time to transition to said RRC connected state.

In some example embodiments, in response to said current RRC state being an inactive state, said step of determining is configured to determine if said quality of service profile and payload size require an RRC connected state; and if so to determine an expected time for said apparatus to transition to said RRC connected state, said latency associated with said quality of service profile and payload size including said expected time; and if not to determine a configured grant periodicity and to determine said latency associated with said quality of service profile and payload size in dependence upon said configured grant periodicity.

In some example embodiments, said step of determining determines said expected time to transition to said RRC connected state in dependence upon an estimated time to perform a RACH random access channel procedure.

In some example embodiments, said step of said estimated time to perform said RACH procedure is determined in dependence upon random access and contention resolution timers, the periodicity of the physical random access channel resources PRACH associated with the synchronisation signal block SSB selected by the apparatus.

In some example embodiments, in response to said current RRC state being a connected state, said step of determining determines a time to be allocated one of an uplink or downlink resource, said determined latency comprising said determined time.

In some example embodiments, said step of when said determined latency includes said time to transition to said RRC connected state, said step of determining is further configured to determine an estimated time for said apparatus to be allocated one of an uplink or downlink resource in said RRC connected state, said determined latency further comprising said estimated time.

According to various, but not necessarily all, embodiments of the invention there is provided according to another aspect a method performed at an apparatus comprising: receiving at least one indicator of a latency and at least one indicator of a corresponding quality of service profile from a plurality of intermediate apparatuses, said at least one indicator of latency being indicative of a latency associated with setting up a link able to support said corresponding quality of service profile between said intermediate apparatus and a further apparatus; determining a quality of a sidelink channel for communicating with each of said intermediate apparatuses; and selecting one of said intermediate apparatuses as a relay apparatus for a predetermined communication with said further apparatus in dependence upon said latency indicators, said quality of said sidelink channels and characteristics of said predetermined communication.

In some example embodiments, said step of selecting comprises determining a required quality of service profile for said predetermined communication and selecting in dependence upon latency indicators associated with a corresponding quality of service profile.

In some example embodiments, said step of receiving comprises receiving a plurality of indicators of a plurality of latencies for at least one of said quality of service profiles from at least one of said intermediate apparatuses, said plurality of latencies each relating to a different payload size; and said means for selecting is configured to select in dependence upon said latency associated with a payload of a size corresponding to said payload of said predetermined communication.

In some example embodiments, said method comprises generating a request for an indication of said latencies and transmitting said request to said plurality of intermediate apparatuses.

According to various, but not necessarily all, embodiments of the invention there is provided a computer program which when executed by a processor on an apparatus is operable to control said apparatus to perform a method according to a yet further or another aspect of the invention.

According to various, but not necessarily all, embodiments of the invention there is provided an apparatus, comprising circuitry configured to determine a plurality of latencies associated with data communication with a further apparatus, said plurality of latencies corresponding to a plurality of quality of service profiles for said data communication, said plurality of latencies each comprising a latency for setting up a link with said further apparatus with said quality of service profile; circuitry configured to generate for at least some of said plurality of determined latencies an indicator of said latency and an indicator of said corresponding quality of service profile; and circuitry configured to output said indicators.

In some example embodiments, said means for determining comprises circuitry configured to determine, said means for receiving comprises circuitry configured to receive.

According to various, but not necessarily all, embodiments of the invention there is provided an apparatus: circuitry configured to receive at least one indicator of a latency and at least one indicator of a corresponding quality of service profile from a plurality of intermediate apparatuses, said at least one indicator of latency being indicative of a latency associated with setting up a link able to support said corresponding quality of service profile between said intermediate apparatus and a further apparatus; circuitry configured to determine a quality of a sidelink channel for communicating with each of said intermediate apparatuses; and circuitry configured to select one of said intermediate apparatuses as a relay apparatus for a predetermined communication with said further apparatus in dependence upon said latency indicators, said quality of said sidelink channels and characteristics of said predetermined communication.

Further particular and preferred aspects are set out in the accompanying independent and dependent claims. Features of the dependent claims maybe combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION

Some example embodiments will now be described with reference to the accompanying drawings in which:
Fig. 1A and Fig. 1B show an example of signalling protocol for relay discovery according to two models;
Fig.2 schematically illustrates the setup latency time;
Fig. 3 schematically shows a remote user equipment seeking to use one of two intermediate user equipment (relay UE) to communicate with a network;
Fig. 4 schematically shows a diagram illustrating steps performed at potential relay UEs and a remote UE according to example embodiments along with signalling between them;
Fig. 5 schematically shows steps performed at the relay UE to determine the setup latency information for output according to an example embodiment;
Fig. 6 schematically shows a remote user equipment and potential relay user equipment according to an example embodiment.

### DETAILED DESCRIPTION

Before discussing the example embodiments in any more detail, first an overview will be provided.

When an apparatus that may be a remote UE (user equipment) is selecting another apparatus that may be a relay UE as an intermediate UE to forward messages to a destination that may be the network or a further UE, it may do so in dependence upon the channel quality, perhaps determined by the measured RSRP (reference signal received power) between the remote and relay devices. However, although this information may be accessible at the remote user equipment, information regarding the upstream link to the subsequent device may also be important and more difficult to access. It should be noted that it may not only be the quality of the upstream link that affects performance of the data transmission but also the latency required to set up any required link to the destination.

In order for information regarding the upstream link to be available to the remote UE it is proposed that a potential relay UE determines the amount of time that it would take to set up a particular type of link with a particular quality of service and an indication of this information may then either be transmitted to a particular UE or broadcast. The remote UE receiving this information from potential relay UEs can then use it together with the determined channel quality of the link to each of the potential relay UEs to select a preferred relay UE for a particular data transmission. In this regard the requirements of the particular data transmission and the quality of service of any link that it would require may be used to determine the relevant latency from the information sent.

In some embodiments, only the latencies of links currently supported are output by the relay UE.

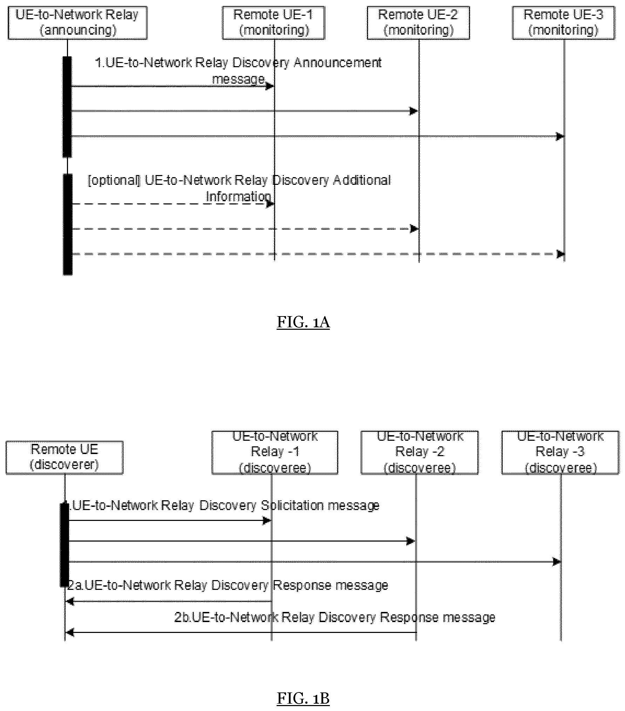

Fig. 1A and fig. 1B show an example of signalling protocol for relay discovery according to two models. Fig/ 1A shows model A, while Fig. 1B shows model B.
- Model A uses a single discovery protocol message (Announcement).
- Model B uses two discovery protocol messages (Solicitation and Response). For Relay Discovery Additional Information, only Model A discovery is used. The additional information may include for example the related system information of the 5G ProSe (proximity service) UE-to-Network Relay's serving cell.

Conventionally the relay (re-)selection criterion and procedure is based on the quality (i.e. RSRP (reference signal received power) of the channel between the remote UE and the Relay UE and does not consider either the achievable "QoS" set of 5QI (quality of service indicator) profiles of the link between the relay UE and the intended relay destination (e.g. NW or a third UE), or the time it will take the relay UE to be able to offer a particular QoS or QoS groups (i.e. the setup latency of a set of 5QI profiles). A QI may be a pointer to a set of QoS characteristics such as priority level, packet delay or packet error rate.

Note that although a 5QI profile can include a packet delay budget, which corresponds to the maximum expected latency (within some percentile) that the packet can experience, this value assumes that the radio link has already been established and therefore only accounts for latencies associated with the transport of the packet and not with the establishment of the radio link. In contrast, the setup latency refers to the amount of time a relay UE would take to transition to a state where it can offer a specific 5QI profile. For example, if the relay UE is in RRC Inactive state, then it will require some time to transition from RRC Inactive to RRC Connected state; this time being denoted as the setup latency time.

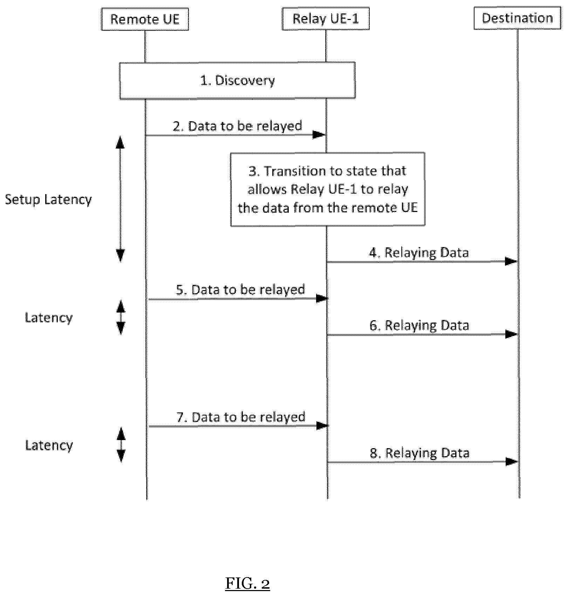

Fig. 2 schematically shows this setup latency, that being the time for setting up a connection between the relay UE and the destination to allow data to be transmitted from the relay UE to the destination. As can be seen this setup latency is in addition to and separate to the actual latency associated with the transmission of the data. Note that the time instant between the completion of the discovery phase (step 1) and the time instant between the actual transmission of a payload to be relayed (step 2) can be long enough such that the Relay UE-1 does not transition immediately to the state that allows the Relay UE-i to relay the data from the remote UE after discovery. When this is the case, then there will be a sufficiently large setup latency such that it becomes necessary and meaningful for the Relay UE-1 reports it during the discovery phase.

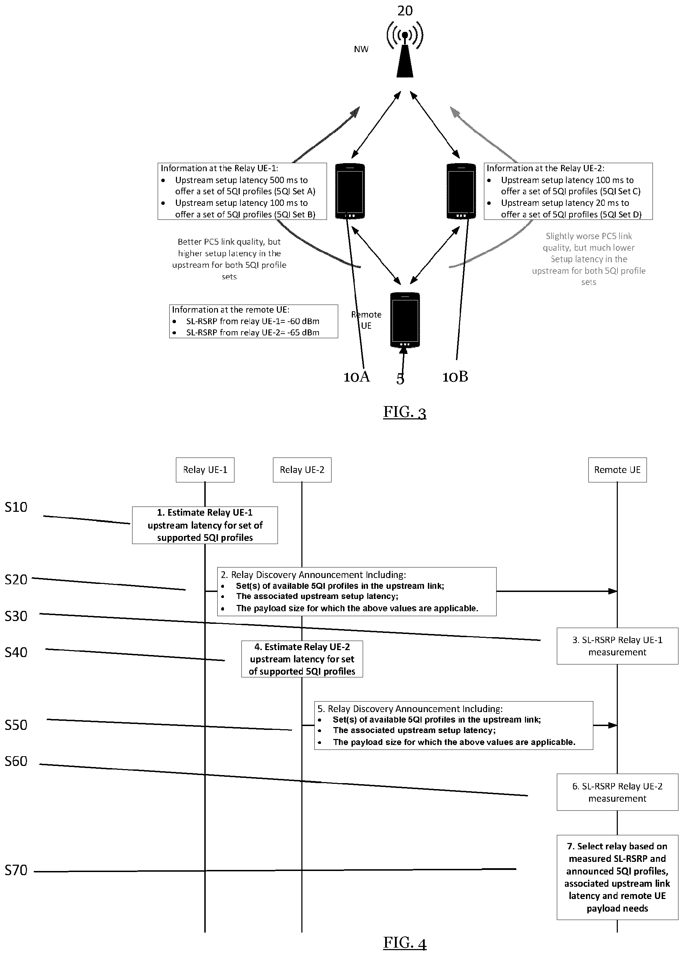

Fig. 3, schematically shows an example where remote UE 5 wishes to communicate with network 20 and there are two potential relay UEs 10A and 10B available. The relay UE-110A and UE-2 10B can each offer two sets of 5QI profiles and respective setup latencies. However, as this information is not shared with the remote UE 5 then the relay selection is made based purely on the channel quality (e.g. the SL-RSRP between the remote UE and the relay UE), which implies that the remote UE 5 will select the relay UE-1 10A and therefore its transmission will not only be limited by the set of 5QI profiles available at the relay UE-110A, it will also incur the associated setup latencies to achieve the set of 5QI profiles.

Embodiments propose to include information regarding the 5QI profiles that are available at the relay UE in the relay UE announcement/discovery messages, along with the setup latency associated with the profiles in the information output by the relay UEs 10A, 10B.

Embodiments also propose ways in which the relay UE 10A, 10B can determine the expected setup latency information of its upstream link such that this information can be included in the announcement/ discovery message.

Fig. 4 shows a diagram illustrating steps performed at both potential relay UEs and a remote UE according to an example embodiment along with signalling between them.

In this example embodiment at step S10 relay UE-1 estimates the upstream latency for a set of 5QI profiles that it supports. For example, if the relay UE is currently in RRC Connected state, then it is expected that it will incur lower setup latency while relaying a remote UE's transmission, than in the case where the relay UE is currently in RRC Idle/Inactive state. However, the externalization of the relay UE RRC state does not provide enough information, e.g. a UE in RRC Connected state might not have scheduled SR resources or have a long period between the configured SR resources. Furthermore, depending on the 5QI profile there might be additional aspects to be considered, for example if it is a 5QI profile that offers ultra-high reliability, there might be the need to establish dual connectivity over the Uu (user equipment to user equipment interface). Therefore, two relay UEs in RRC Connected state can in fact offer quite different upstream link setup latencies, motivating the need for this estimation to occur per 5QI profile or set of 5QI profiles. In this regard similar 5QI profiles may be grouped together in some embodiments and an indicator of estimated latency be provided for the group.

In some cases, the latency may be associated with a particular payload. In this regard, for SDT small data transmission, then a UE in idle mode may be able to transmit the data without needing to transition to RRC mode, in which case for this small payload the latency will be small, whereas for a larger payload that cannot be transmitted using SDT then the latency will be higher. At step S20 UE-i transmits a Relay Discovery Announcement message to the remote UE. The message includes the set(s) of available 5QI profiles in the upstream link, (ii) the associated setup latency and (iii) the dependence on the payload size. This later aspect covers the case where a relay UE, which is currently in RRC Inactive state and has a valid SDT configuration in Uu, is able to relay a payload up L bits without incurring the setup latency associated with transitioning to RRC CONNECTED. This flow diagram illustrates the steps of model A where the UE announces its capabilities, in model B there will be a request for the capabilities from the remote UE and the capabilities will be sent in response to this request.

So as noted above at step S20 the relay UE-i, transmits its Relay Discovery Announcement Message that includes:
a. The set(s) of available 5QI profiles in the upstream link;
b. The associated upstream setup latency to each of these 5QI sets;
c. The payload size after which the above setup latency values are applicable;
   i. In the case where the relay UE must be in RRC CONNECTED to offer a specific 5QI profile or set of profiles (for example for the 5QI profiles associated with GBR), the payload size indication can be absent, or it would be set to zero;
   ii. For the 5QI profiles associated with non-GBR (guaranteed bit rate) (and some profiles associated with delay critical GBR, but with small payloads, identified by a Default Maximum Data Burst Volume), two setup latencies can be provided:
      I. for payloads below a L bits threshold - In this case, these payloads can be relayed by the relay UE using SDT (when having a valid SDT configuration), while still allowing the relay UE to remain in the RRC Inactive state.

At step S30 the remote UE determines the quality of the sidelink channel to the relay UE-i by determining the SL-RSRP. The remote UE may do this by measuring the RSRP associated with the PC5 link with the relay UE-i, e.g. based on the received Relay Discovery Announcement Message.

At step S40 relay UE-2 estimates the upstream latency for a set of 5QI profiles that it supports and transmits them to the remote UE in a relay discovery announcement at step S50. (These steps correspond to steps S10 and S20 for UE-i).

With this information, the remote UE becomes able to select the relay UE that can meet the QoS requirements associated with its traffic at step S70. The remote UE based on the measured PC5 RSRP towards each relay UE as well as the received information about the offered 5QI profiles by each relay UE and the associated upstream setup latency as well as the remote UE payload needs.

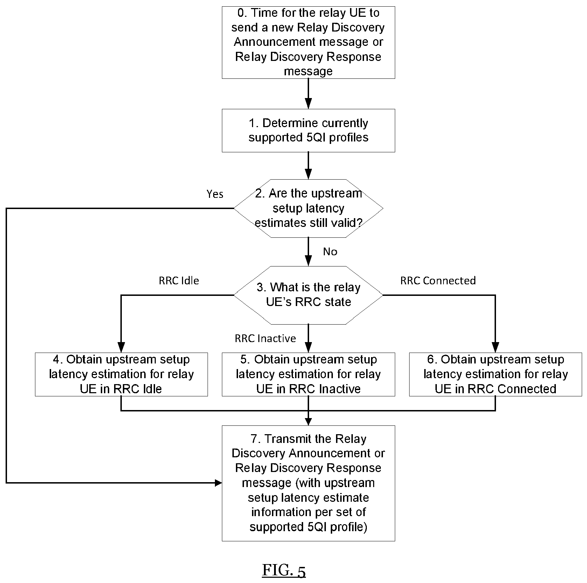

Fig. 5 sets out steps performed at the relay UE to determine the information for the relay discovery announcement or response (where model B is performed).

The method starts at step 0 when it is time for the relay UE to send a new relay discovery announcement or response message. In this regard the UE may periodically broadcast these announcements, or it may transmit them in response to a request to do so (model B).

At step 1 the relay-UE 1 determines the 5QI profile(s) that it currently supports and the upstream setup latency associated with each. This determination can be based on network limitations (i.e. the network might only support a limited set of 5QI profiles), the relay UE current RRC state, the relay UE's current load (in terms of its own traffic and traffic from active remote UEs), energy considerations (e.g. certain 5QI profiles with low PDB (packet delay budget) and high reliability requirements will demand more energy expenditure from the relay UE and as such might not be desirable if the relay UE current source of energy is its battery).

At step 2 the relay UE evaluates if the previously obtained upstream setup latency estimates for each 5QI profile are still valid. It may do this based on a timer or change of RRC state or associated RRC configuration or change of SDT configuration or addition or removal of a supported 5QI profile.

If they are it proceeds directly to step 7 where these values are output in a relay discovery announcement, or response message.

If they are determined not to be still valid, then the UE determines at step 3 if it is in RRC connected, inactive or idle state. These states affect the upstream latency of delivering different services for different payloads. Thus, the UE identifies which state it is currently in and jumps to step 4 when in RRC Idle, to step 5 when in RRC Inactive, to step 6 when in RRC Connected.

The expected upstream setup latency in RRC Idle (step 4) is composed by the expected time to transition from RRC Idle to Connected plus the time to send a SR/BSR (scheduling request/signalling radio bearer) and be allocated an uplink resource:
a. The expected time to transition to RRC Connected includes:
   i. The 2-step or 4-step RACH procedure expected duration, which can be estimated based on the following information that is provided in the RACH (random access channel) configuration:
      1. the configured RAR (random access response) and CR (contention resolution) timers;
      2. the periodicity of the PRACH (physical random access channel) resources associated with the SSB selected by the relay UE;
   ii. The completion of the RRC exchanges to transition to RRC Connected, including the transmission of the RRCSetupRequest, reception of the RRCSetup and transmission of the RRCSetupComplete;
   iii. The completion of the NAS (non-access stratum) signalling to establish the relay UE user context and security keys;
   iv. The RRC reconfiguration, where the UE is provided with a SR configuration;
b. The actual SR and subsequent BSR transmission and reception of the uplink resource allocation. Note this is the time the UE starts the first transmission while the BSR from remote may need several (not necessarily continuous) UL grants. Then the time reflects the delay per single transmission;
c. For the case of 5QI profiles requiring dual connectivity to the network, then the latency associated with this setup should also be considered;
d. Note the quantities in step 4 a.i can be derived from the SIB information, while the quantities in step 4 a.ii- step 4.a.iv and step 4.b can either be:
   i. provided by the NW in an explicit manner; or
   ii. have to be assumed to be a constant representative of the typical NW experienced latency in these steps; or
   iii. the average latency experienced by the relay UE when doing this operation in past.

The expected setup upstream latency in RRC Inactive (step 5) is as follows:
a. If the relay UE does not have any valid SDT (small data transmission) configuration, then the expected upstream latency will be composed by the transition time to RRC Connected plus the time to send a SR/BSR and being allocated an uplink resource;
   i. The expected time to transition to RRC Connected, which includes:
      1. The 2-step or 4-step RACH procedure expected duration, which can be estimated based on the following information that is provided in the RACH configuration:
         a. the configured RAR and CR timers;
         b. the periodicity of the PRACH resources associated with the SSB (synchronisation signal block) selected by the relay UE;
      2. The completion of the RRC exchanges to transition to RRC Connected, including the transmission of the RRCResumeRequest, reception of the RRCResume and transmission of the RRCResumeComplete;
   ii. The actual SR and subsequent BSR transmission and reception of the uplink resource allocation;
   iii. Note the quantities in step 5.a.i can be derived from the SIB information, while the quantities step 5.a.ii-5.a.iv and step 5.b can either be:
      1. provided by the NW in an explicit manner; or
      2. have to be assumed to be a constant representative of the typical NW experienced latency in these steps; or
      3. the average latency experienced by the relay UE when doing this operation in past.
b. If the relay UE has a valid SDT configuration, then the expected upstream latency will be dependent of the available SDT type:
   i. For RACH based SDT, then the expected upstream latency will be dependent on 2-step or 4-step RACH procedure expected duration, which can be estimated based on the following information that is provided in the RACH configuration:
      1. the configured RAR and CR timers;
      2. the periodicity of the PRACH resources associated with the SSB selected by the relay UE;
   ii. For CG configured grant based SDT, then the expected upstream latency is associated with the CG resource periodicity;
c. Even in the case where the relay UE has a valid SDT configuration, there can be an upper data size threshold associated with it, meaning that if the remote UE payload is above that threshold, then the relay UE will not be able to utilize SDT and instead will have to transition to RRC Connected. Therefore, in this case the relay UE should provide at least two expected upstream latencies associated with data payload thresholds;
d. For the case of 5QI profiles requiring dual connectivity to the network, then the latency associated with this setup should also be considered.

The expected setup upstream latency in RRC Connected (step 6) is as follows:
a. In case there are SR resources configured, what is the time until the next SR and expected UL allocation for the BSR and sub-sequent UL allocation to relay the remote UE payload;
b. If the SR resources that are not configured, what is the time for the next PRACH resource (including RACH type) and expected time until the BSR can be sent and the sub-sequent UL allocation to relay the relayed payload;
c. An additional aspect is the relay UE's experienced load associated with its own transmission as well as the relaying from other remote UEs. This can impact both the setup latency as well as increase the serving time of the remote UE's transmission. The latter aspect impacts the 5QI that the relay UE can support due to the PDB. The increase on the setup latency can be obtained by the relay UE based on the remaining data to be served from the relay UE and other remote UEs until it can start to serve the remote UE's payload;
d. For the case of 5QI profiles requiring dual connectivity to the network, then the latency associated with this setup should also be considered.

After determining the expected setup upstream latency per 5QI, the relay UE proceeds with the broadcast of a new Relay Discovery Announcement message or Relay Discovery Response message as appropriate at step 7.

Example signalling details of the proposed signalling are provided below.

For each 5QI (or set/list of 5QIs), the following information can be provided:
- When a relay UE is in RRC Inactive state and has a valid SDT configuration:
   ∘ For GBR 5QI type:
      ▪ Upstream setup latency
   ∘ For non-GBR or delay critical GBR 5QI type:
      ▪ Upstream setup latency for payloads <L bits;
      ▪ Upstream setup latency for payloads >L bits;
- When a relay UE does not have a valid SDT configuration:
   ∘ For GBR, non-GBR or delay critical GBR 5QI type:
   ▪ Upstream setup latency

Additionally, the upstream setup latency is expected to be quantized as either of these options:
- In x ms intervals (or frames, or SFN (system frame number) range, or any other time quantity), e.g. 10 ms, 20 ms, etc...;
- In low, medium and high setup latency, which could then have a mapping to ranges of setup latency, e.g.:
   ∘ Low - 0 to 50 ms;
   ∘ Medium - 50 to 100 ms;
   ∘ High - >100 ms.

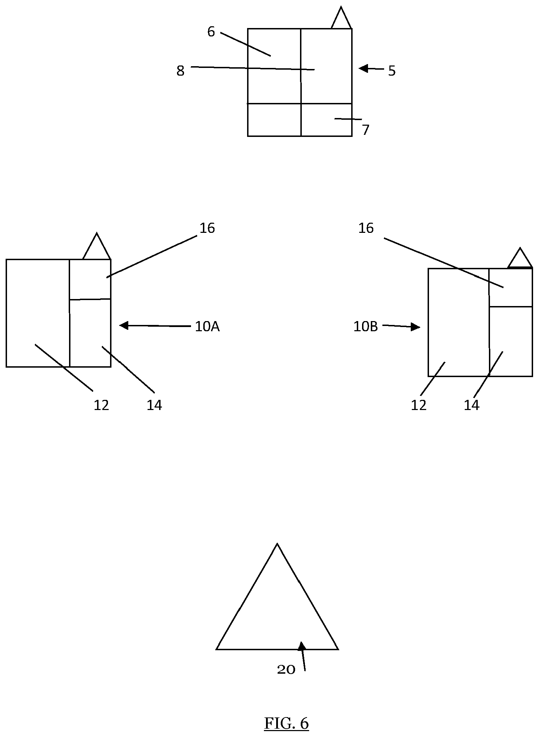

Fig. 6 shows a remote and potential relay user equipment according to an example embodiment. Remote user equipment 5 seeks to communicate with the network node 20 using an intermediate or relay user equipment 10A or 10B in this example embodiment. In other example embodiments, the remote user equipment 5 may seek to communicate with a further user equipment using an intermediate user equipment, where the further user equipment is at a distance from remote user equipment such that remote user equipment cannot communicate directly with it.

Remote user equipment seeks to select one of the potential user equipment 10A 10B as a relay user equipment to communicate with network node 20. Remote user equipment 5 comprises receiving circuitry 8 for receiving receive and decoding signals from potential relay user equipment in this case 10A, 10B, these signals including indicators of latencies associated with setting up different links at these user equipment with the network node 20. These different links are links able to support different quality of service profiles. User equipment 5 also comprises selection circuitry 7 configured to select one of the potential relay user equipment based on information received from receiving circuitry 8. User equipment 5 also comprises determining circuitry 6 configured to determine a quality of a sidelink channel for communicating with each of the relay apparatuses 10A, 10B. The selecting circuitry 7 will select one of the relay user equipment 10A or 10B in dependence upon both the determined quality of the sidelink channel between the user equipment and the respective relay user equipment and the setup latency associated with setting up a link between the relay user equipment and the network node 20, which link has the required quality of service profile required for the current data communication. In some embodiments, the user equipment 5 will also consider the quality of the link between the relay user equipment and the network node when making its selection. In this regard, an indication of the quality of the link may be received alongside the indication of setup latency by receiving circuitry 8.

Each of the relay user equipment 10A, 10B comprise determining circuitry 12 configured to determine a plurality of latencies associated with setting up a plurality of different links with the network node 20 each of the plurality of latencies corresponding to a particular quality of service profiles or a particular group of quality of service profiles of the respective link. The relay user equipment 10A, 10B also comprise generating circuity 14 configured to generate an indicator of the latency and an indicator of the corresponding quality of service profile for at least some of the plurality of determined latencies and output circuitry 16 for outputting these indicators. In some embodiments, the determining circuitry 12 will also determine the quality of at least one of the respective links with the network node and will include an indicator of this in the signal output.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus, comprising
means for determining a plurality of latencies associated with data communication with a further apparatus, said plurality of latencies corresponding to a plurality of quality of service profiles for said data communication, said plurality of latencies each comprising a latency for setting up a link with said further apparatus with said quality of service profile;
means for generating for at least some of said plurality of determined latencies an indicator of said latency and an indicator of said corresponding quality of service profile; and
means for outputting said indicators.

2. An apparatus according to claim 1, wherein said means for determining is configured to determine which of said plurality of quality of service profiles is currently supported by said apparatus and to determine latencies for at least some of said supported quality of service profiles.

3. An apparatus according to any preceding claim, wherein said means for determining is configured to determine said supported quality of service profiles in dependence upon at least one of network limitations, the apparatus's current connected state, the apparatus's current load and the apparatus's battery charge level.

4. An apparatus according to any preceding claim, wherein said means for determining is configured to determine a plurality of latencies for at least one of said quality of service profiles, said plurality of latencies for said at least one of said quality of service profiles each relating to a different payload size.

5. An apparatus according to any preceding claim, wherein said means for determining is configured to determine said latencies periodically.

6. An apparatus according to any preceding claim, wherein said apparatus further comprises means for receiving from a remote apparatus a request for information on data communication with said further apparatus, said means for determining is configured to determine said latencies in response to receipt of said request; and
said means for outputting is configured to transmit said indicators to said remote apparatus.

7. An apparatus according to any preceding claim, wherein said means for determining is configured prior to determining said plurality of latencies to determine whether said plurality of latencies have changed since indicators of previously determined latency were output, and where so to determine updated latencies, and where not to indicate to said means for outputting to output said indicators of said previously determined latencies.

8. An apparatus according to any preceding claim, wherein said means for determining is configured to determine said plurality of latencies in dependence upon a current RRC state of said apparatus.

9. An apparatus comprising:
means for receiving at least one indicator of a latency and at least one indicator of a corresponding quality of service profile from a plurality of intermediate apparatuses, said at least one indicator of latency being indicative of a latency associated with setting up a link able to support said corresponding quality of service profile between said intermediate apparatus and a further apparatus;
means for determining a quality of a sidelink channel for communicating with each of said intermediate apparatuses; and
means for selecting one of said intermediate apparatuses as a relay apparatus for a predetermined communication with said further apparatus in dependence upon said latency indicators, said quality of said sidelink channels and characteristics of said predetermined communication.

10. An apparatus according to claim 9, wherein said means for receiving is configured to receive a plurality of indicators of a plurality of latencies for at least one of said quality of service profiles from at least one of said intermediate apparatuses, said plurality of latencies each relating to a different payload size; and
said means for selecting is configured to select in dependence upon said latency associated with a payload of a size corresponding to said payload of said predetermined communication.

11. An apparatus according to claim 9 or 10, said apparatus being configured to generate a request for an indication of said latencies and to transmit said request to said plurality of intermediate apparatuses.

12. An apparatus according to any preceding claim wherein the means comprise: at least one processor; and at least one memory storing instructions that, when executed by the at least one processor, cause the performance of the apparatus.

13. A method performed at an apparatus comprising:
determining a plurality of latencies associated with data communication with a further apparatus, said plurality of latencies corresponding to a plurality of quality of service profiles for said data communication, said plurality of latencies each comprising a latency for setting up a link with said further apparatus with said quality of service profile;
generating for at least some of said plurality of determined latencies an indicator of said latency and an indicator of said corresponding quality of service profile; and
outputting said indicators.

14. A method performed at an apparatus comprising:
receiving at least one indicator of a latency and at least one indicator of a corresponding quality of service profile from a plurality of intermediate apparatuses, said at least one indicator of latency being indicative of a latency associated with setting up a link able to support said corresponding quality of service profile between said intermediate apparatus and a further apparatus;
determining a quality of a sidelink channel for communicating with each of said intermediate apparatuses; and
selecting one of said intermediate apparatuses as a relay apparatus for a predetermined communication with said further apparatus in dependence upon said latency indicators, said quality of said sidelink channels and characteristics of said predetermined communication.

15. A computer program which when executed by a processor on an apparatus is operable to control said apparatus to perform a method according to claim 13 or 14.
